# EUROPÄISCHE PATENTSCHRIFT

(11) **EP 2 045 048 B1**
(45) Veröffentlichungstag und Bekanntmachung des Hinweises auf die Patenterteilung: **07.09.2011**
(21) Anmeldenummer: 08405254.7
(22) Anmeldetag: 06.10.2008
(51) Int. Cl.: B25H 3/02, B65D 81/113, G05B 19/42

(54) **Verfahren zur Konfiguration von Einsätzen für Behälter für Lagerobjekte sowie Konfigurationssystem**
Method for configuring the use of containers for storage buildings and configuration system
Procédé de configuration d'insertions destinées à des récipients pour objets de stockage et système de configuration

(30) Priorität: 05.10.2007 CH 15532007
(43) Veröffentlichungstag der Anmeldung: 08.04.2009
(73) Patentinhaber: Digipack AG, 8623 Wetzikon (DE)
(72) Erfinder: Lang, Oswin, 8112 Otelfingen (CH); Diggelmann, Ernst, 8615 Wermatswil (CH)
(74) Vertreter: Frei Patent Attorneys

(56) Entgegenhaltungen:
- WO-A-2005/011925
- DE-C1- 10 219 038
- US-A- 4 964 514
- US-A- 5 409 560
- US-A1- 2002 137 615
- US-A1- 2004 220 692
- US-A1- 2006 260 966

## Beschreibung

Die Erfindung bezieht sich auf das Gebiet der automatisierten Herstellung von Einsätzen für Behälter für Lagerobjekte, beispielsweise von Einsätzen für Werkzeugkoffer oder -Schubladen. Die Erfindung bezieht sich auf ein Verfahren zur Konfiguration von Einsätzen für Behälter für Lagerobjekte, ein Konfigurationssystem, ein Computerprogramm sowie einen Datenträger gemäss dem Oberbegriff der entsprechenden unabhängigen Patentansprüche.

### STAND DER TECHNIK

Eine derartiges Verfahren zur Konfiguration von Einsätzen für Behälter für Lagerobjekte ist beispielsweise aus DE 102 19 038 C1 bekannt. Gemäss diesem Verfahren werden gespeicherte Konturen von Werkzeugen aus einem Speicher ausgelesen und von einem Benutzer in einer grafischen Darstellung eines Einsatzes angeordnet. Anhand der fertigen Darstellung wird eine numerisch gesteuerte Arbeitsmaschine zum Herausarbeiten eines entsprechenden Einsatzes aus einem geeigneten Material angesteuert.

US 2004/0220692 A1 offenbart ein Verfahren zur Erfassung und Bearbeitung von Layouts für Verpackungseinsätze. Dabei werden Bilder von Lagergegenständen mit einer Kamera erfasst und in eine Vektor-Repräsentation der Konturen der Gegenstände umgewandelt. Die Konturen können bearbeitet und gespeichert werden, sowie zum Ausschneiden von Einsätzen verwendet werden. Es besteht jedoch kein Bezug zu Daten von Behältern, aus denen vorgegebene Grössen von Einsätzen für diese Behälter herausgelesen werden könnten.

US 2006/0260966 zeigt mehrschichtige Koffereinsätze, macht jedoch keine Angaben zu deren Konfiguration.

### DARSTELLUNG DER ERFINDUNG

Es ist Aufgabe der Erfindung, ein Verfahren zur Konfiguration von Einsätzen für Behälter für Lagerobjekte sowie ein Konfigurationssystem zur Konfiguration von Einsätzen für Behälter für Lagerobjekte der eingangs genannten Art zu schaffen, welche in automatisierter Weise vielseitig einsetzbar respektive herstellbar sind.

Diese Aufgabe lösen ein Verfahren zur Konfiguration von Einsätzen für Behälter für Lagerobjekte gemäß Anspruch 1, sowie ein Konfigurationssystem zur Konfiguration von Einsätzen für Behälter für Lagerobjekte gemäß Anspruch 10, ein Computerprogramm gemäß Anspruch 11 und ein Datenträger gemäß Anspruch 12.

Es werden in dieser Anmeldung die folgenden Begriffe verwendet:
- **Lagerobjekte** sind vorzugsweise Werkzeuge oder Bauteile (auch "Komponenten" genannt), die in einer definierten Position in einem Behälter gelagert und/oder transportiert werden sollen. Die **Behälter** sind vorzugsweise Koffer oder Schubladen von Schränken oder Werkstattwagen.
- **Einsätze** werden jeweils in einen Behälter eingelegt, ggf. auch eingeklebt, und decken die Bodenfläche des Behälters teilweise oder vorzugsweise ganz ab. Die Einsätze weisen **Aussparungen** auf, welche der Form der Lagerobjekte entsprechen und zur Aufnahme der Lagerobjekte vorgesehen sind.
- **Konturen** definieren die Umrisse eines Lagerobjektes als 2D-Umriss, in einer verallgemeinerten Variante auch als 3D-Kontur. Konturen geben jeweils einen Bereich einer Aussparung vor, die aus einem Einsatz ausgeschnitten wird.
- Die Gesamtheit aller Konturen eines Einsatzes wird als **Layout** bezeichnet. Das Layout eines Einsatzes definiert also die Aussparungen, die aus dem Einsatz auszuschneiden oder ausgeschnitten sind.

Das Verfahren ist also zur Konfiguration von Einsätzen für Behälter für Lagerobjekte vorgesehen, wobei die Einsätze individualiserte Aussparungen entsprechend der Form der Lagerobjekte aufweisen und zur Aufnahme der Lagerobjekte vorgesehen sind. Das Verfahren weist die folgenden Schritte auf:
- Erfassen, nach Massgabe einer Benutzereingabe, einer Auswahl eines Behälters. Dazu wird beispielsweise einem Benutzer eine textuelle und/oder mit Bildern versehene Liste von Behältern zur Auswahl angeboten. Umgekehrt können aber auch, ausgehend von einem Satz von vorgegebenen Lagerobjekten, automatisch ein oder mehrere Behälter (einzeln oder als Teil eines Schrankes), entsprechend der Menge und der Grösse dieser Lagerobjekte bestimmt und vorgeschlagen werden. Dabei kann auch ein Vorschlag für ein Layout (siehe auch im entsprechenden nachfolgenden Schritt zur Erstellung eines Layouts) automatisch erstellt werden.
- Auslesen von geometrischen Massen des ausgewählten Behälters aus einem Speicher einer Behälterdatenbank.
- Erfassen, nach Massgabe einer Benutzereingabe, einer Auswahl von einem oder mehreren Lagerobjekten und/oder von einer oder mehreren Konturen, wobei eine Kontur jeweils die Form einer Aussparung definiert.
- falls Lagerobjekte ausgewählt worden sind, Bestimmen von entsprechenden Konturen der Lagerobjekte durch Auslesen aus einer Lagerobjektdatenbank.
- Erstellen, automatisiert und/oder durch Interaktion mit einem Benutzer, eines Layouts, wobei das Layout eine Anordnung der erfassten respektive bestimmten Konturen auf einem Einsatz für den ausgewählten Behälter repräsentiert.
- Abspeichern des Layouts auf einem Datenträger und/oder Übermitteln des Layouts zur Herstellung des Einsatzes.

Dadurch wird es möglich, die Herstellung von Einsätzen mit der Herstellung (und auch der Bestellung und Lieferung) von Behältern zu integrieren. Einerseits ist die Verbindung der Konfiguration von Einsätzen und Behältern zweckmässig und effizient, da die geometrischen Masse von Behältern inklusive ihrer Höhe automatisch in die Herstellung der Layouts übernommen werden. Andererseits liegt nach Beendigung der Konfigurationsprozesses die komplette Information über Lagerobjekte, Behälter und Einsätze vor, so dass eine Bestellung und die Fertigung eines Behälters mit einem oder mehreren individuell konfigurierten Einsätzen und darin aufzubewahrenden Lagerobjekten ausgelöst werden kann.

Weiter ist es dadurch möglich, dass die Interaktion mit einem Benutzer auf der Ebene der Lagerobjekte, beispielsweise von Werkzeugen, beginnt: dies ist eine zweckmässigere Art der Interaktion, da es letztlich die Werkzeuge sind, an denen der Benutzer interessiert ist, und nicht ihre Konturen als solche. Erst aus einer Wahl der Werkzeuge (respektive, allgemein gesprochen, der Lagerobjekte) werden automatisch und anhand der Lagerobjektdatenbank die entsprechenden Konturen zur Einbettung der Lagerobjekte bereitgestellt.

Die Benutzerinteraktion beginnt beispielsweise mit der Wahl von Lagerobjekten und der Wahl von Behältern (wobei die Reihenfolge variabel ist), jeweils aus einem entsprechenden computerimplementierten Katalog. Für die anschliessende Benutzerinteraktion wird beispielsweise eine Liste der ausgewählten Lagerobjekte erstellt. Anschliessend wird in einer textuellen und/oder graphischen Aufstellung der Liste jeweils visualisiert, für welche Lagerobjekte bereits eine Kontur im Layout plaziert worden ist. Die äussere Kontur des Einsatzes wird entsprechend der Innenmasse des gewählten Behälters bestimmt, welche aus der Behälterdatenbank bezogen wird. In der Regel ist diese äussere Kontur ein Rechteck, sie kann aber auch beispielsweise seitliche Einbuchtungen aufweisen, korrespondierend mit Ausbuchtungen an einer Innenseite des Behälters, beispielsweise im Bereich eines Koffergriffes oder eines Scharniers.

In einer bevorzugten Variante der Erfindung ist beim Erstellen des Layouts eine von mehreren Orientierungen eines Lagerobjektes um eine horizontale Achse wählbar. Dabei wird konventionsgemäss die Ebene der Behälter, über welcher sich die Einsätze erstrecken, als horizontal betrachtet. Dazu sind vorzugsweise für diese Lagerobjekte jeweils mehrere Konturen (beispielsweise "stehend" und "liegend") in der Lagerobjektdatenbank hinterlegt, und wird je nach Wahl der Orientierung eine entsprechende Kontur im Layout angezeigt. In einer anderen bevorzugten Variante der Erfindung ist ein 3D-Modell der Aussenkontur von Lagerobjekten hinterlegt, und wird eine 2D-Kontur als Projektion des 3D-Modells aufgrund einer frei wählbaren Orientierung automatisch berechnet.

In einem weiteren Schritt wird gemäß der Erfindung automatisch überprüft, ob eine Höhe eines Lagerobjekts, also seine Ausdehnung in vertikaler Richtung, ggf. entsprechend seiner gewählten Orientierung, nicht eine entsprechend dem gewählten Behälter vorgegebene Maximalhöhe überschreitet. Vorzugsweise wird, falls dies der Fall ist, eine Anzeige an den Benutzer ausgelöst. Es ist auch möglich, die Grösse eines Lagerobjekts in horizontaler Richtung zu überprüfen.

Anschliessend, falls ein Lagerobjekt die Maximalhöhe überschreitet, wird vorzugsweise ein Behälter mit ausreichender Höhe durch Abfrage der Behälterdatenbank automatisch ermittelt wird und dem Benutzer vorgeschlagen. Falls das Lagerobjekt in mehreren Orientierungen hinterlegt ist, kann auch dem Benutzer die Möglichkeit gegeben werden, eine andere Orientierung zu wählen, bei welcher das Lagerobjekt eine geringere Höhe aufweist.

In einer bevorzugten Variante der Erfindung sind separate Konturen entsprechend Greiflöchern an die Konturen entsprechend den Lagerobjekten ansetzbar. Diese Greiflöcher sind Aussparungen für Finger, um die Lagerobjekte aus dem Einsatz nehmen zu können. Dabei ist die Lage der Greiflöcher durch den Benutzer frei verschiebbare und somit anpassbar. Es können auch Standardpositionen von Greiflöchern für eine Kontur jeweils vorgegeben sein, sind aber durch den Benutzer veränderbar. Dies erlaubt eine flexiblerer Positionierung der Konturen, als dies bei einem System der Fall wäre, in welchem die Konturen bereits von Anfang an fest mit unveränderbaren Greiflöchern versehen sind.

In einer weiteren bevorzugten Variante der Erfindung sind beim Erstellen des Layouts vorgegebene Sätze von Lagerobjekten, beispielsweise Sätze von Werkzeugen, mit jeweils einer oder mehreren vorgegebenen Gruppen von Konturen aus der Lagerobjektdatenbank abrufbar. Diese Gruppen von Konturen bilden jeweils Sub-Layouts, und können vorzugsweise anschliessend durch den Benutzer manuell modifiziert werden (Bewegen und Löschen einzelner Konturen und Gruppen des Sub-layouts).

Vorzugsweise lassen sich in einer grafischen Darstellung des Layouts die Position und die Verdrehung von einzelnen Konturen in der Ebene des Einsatzes durch den Benutzer ändern, oder lassen sich Konturen löschen. Diese Operationen sind ebenfalls auf Gruppen von Konturen gemeinsam anwendbar. Weiter ist es vorzugsweise auch möglich, nur einen Teil der Behälterfläche für einen Einsatz vorzusehen, indem eine Teilfläche des Layouts in der grafischen Darstellung entsprechend markiert wird.

In einer weiteren bevorzugten Variante der Erfindung wird, manuell oder automatisch, ein "Freifach" definiert, wobei das Freifach eine weitere, neben den bereits erfassten respektive bestimmten Konturen verbleibende Fläche des Einsatzes, mit oder ohne Umrandung, als auszuschneidende Kontur definiert.

In einer anderen bevorzugten Variante der Erfindung ist, entsprechend einer Kategorie eines Lagerobjektes, dem Lagerobjekt eine bestimmte Art von Haltematerial zugeordnet. Insbesondere können verstärkte Haltematerialien oder verstärkte Einsätze für schwere Lagerobjekte vorgesehen sein. Vorzugsweise wird bei der Auswahl eines oder mehrerer solcher Lagerobjekte dem Benutzer automatisch signalisiert oder vorgeschlagen, dass zumindest ein Teilbereich des Einsatzes aus einem anderen Haltematerial zu bestehen hat. Der Teilbereich des Einsatzes ist also für die Verwendung eines besonderen Haltematerials zur Lagerung mindestens eines besonderen Lagerobjekts vorgesehen. Nach abgeschlossener Konfiguration wird dem entsprechend auch ein Einsatz aus unterschiedlichen Teil-Einsätzen mit unterschiedlichen Haltematerialien und/oder unterschiedlichem Aufbau gefertigt.

Ein Einsatz gemäss dieser Ausführungsform der Erfindung ist also vertikal unterteilt und weist mehrere unterschiedliche Teilbereiche oder Teil-Einsätze auf, welche zusammen die Fläche des Einsatzes abdecken und unterschiedlich aufgebaut und/oder aus unterschiedlichen Materialien gefertigt sind. Die Teil-Einsätze sind also nebeneinander angeordnet.

In einer bevorzugten Ausführungsform der Erfindung ist ein Teil-Einsatz ein Werkzeughaltereinsatz. Ein solcher weist Ausnehmungen zur Aufnahme von Werkzeughaltern und eine verstärkte Oberseite zur Aufnahme des Gewichts von Werkzeughaltern auf. Die Verstärkung der Oberseite ist beispielsweise durch eine Verstärkungsschicht aus einem harten Kunststoff gebildet.

In einer weiteren bevorzugten Ausführungsform der Erfindung weist ein Einsatz eine verstärkte Unterseite auf, und vorzugsweise auch seitliche Ausschnitte zum Greifen und Herausnehmen des Einsatzes aus einem Behälter. Ein solcher Einsatz ist als Ganzes, zusammen mit den eingesetzten Werkzeugen, aus einem Behälter entnehmbar und in einen anderen Behälter einsetzbar. Damit kann beispielsweise eine Werkzeugsatz für eine bestimmte Aufgabe aus einem Schubladensschrank entnommen und in einen Transportkoffer oder in eine Halterung an einem Arbeitsplatz eingesetzt werden. Dabei kann beispielsweise eine Einsatz für eine Schublade zwei oder mehr nebeneinander die Fläche der Schublade überdeckende Teil-Einsätze aufweisen, wobei jeder der Teil-Einsätze wiederum in einen eigenen Transportkoffer passgenau einsetzbar ist.

In einer bevorzugten Variante der Erfindung weist das Verfahren den weiteren Schritt auf: automatisches Erzeugen eines Programmes zur Ansteuerung einer NC-Maschine, welches Programm Steuerbefehle aufweist zum Ausschneiden der Konturen, abwechselnd mit Steuerbefehlen zum Wechsel von einer Kontur zu einer nächsten Kontur bei ausgeschaltetem Schneidwerkzeug. Damit liegt ein vollständiges Programm zur Steuerung einer NC-Maschine vor, welches ohne weitere Verarbeitung durch die NC-Maschine ausgeführt werden kann - im Gegensatz zu einer reinen Sammlung von Konturen, welche noch in ein NC-Programm integriert werden müssen.

In einer anderen bevorzugten Variante der Erfindung wird einem bestimmten Benutzer aus der Lagerobjektdatenbank, nach Massgabe einer Benutzeridentifikation, nur eine Untermenge von Lagerobjekten angezeigt und ist durch diesen Benutzer auswählbar. Damit ist es möglich, einem Benutzer nur diejenigen Werkzeuge anzubieten, die durch einen bestimmten Lieferanten lieferbar ist. Vorzugsweise geschieht dies, indem einer Benutzeridentifikation jeweils (mindestens) eine Händleridentifikation zugeordnet ist, und dem Kunden nur Lagerobjekte angezeigt werden, welche dieser Händleridentifikation zugeordnet sind. Diese Zuordnung einer Händleridentifikation zu einer Benutzeridentifikation geschieht beispielsweise bei einer erstmaligen Aktivierung des Konfigurationssystems für den Benutzer. Entsprechend kann der Benutzer auch nur Produkte des einen Händlers bestellen.

Die Lagerobjektdatenbank insgesamt weist aber Lagerobjekte entsprechend den Angeboten verschiedener Händler auf, wobei bestimmte Lagerobjekte auch mehreren Händlern zugeordnet sein können. Beispielsweise kann eine Familie X von Lagerobjekten respektive Produkten von mehreren Händlern geliefert werden, aber Familie Y exklusiv nur von einem Händler. Damit ist es möglich, mit einer gemeinsamen Lagerobjektdatenbank, welche nur einmal erstellt werden muss und zentral gewartet werden kann, die Daten zu nichtexklusiven Produktefamilien in effizienter Weise bereitzustellen. Der Zugriff auf die Lagerobjekte geschieht vorzugsweise über einen Schlüssel, der mit einer Artikelnummer des Herstellers identisch ist .Dadurch wird eine Verbindung mit einem Katalogsystem und/oder einem Bestellsystem des Herstellers möglich. In einer anderen Ausführungsform der Erfindung geschieht der Zugriff über einen eigenen Schlüssel des Benutzers, aber es wird die Artikelnummer oder Bestellnummer des Herstellers zusätzlich auch abgespeichert.

In einer weitere bevorzugten Variante der Erfindung ist einem Benutzer eine Benutzerdatenbank zugeordnet, in welcher er eigene Konturen hinterlegen kann. Diese Konturen stehen dann beim Konfigurieren des Einsatzes im Schritt des Erfassens der Konturen zur Verfügung. Damit ist es möglich, benutzerspezifische Aussparungen in Einsätzen anzuordnen und herzustellen. Die Benutzerdatenbank kann physisch bei einer Arbeitsstation des Benutzers angeordnet sein, oder aber virtuell, bei einem Server, welcher beispielsweise auch die anderen Datenbanken verwaltet, als Bereich, der nur dem jeweiligen Benutzer zugänglich ist. Vorzugsweise können in dieser Benutzerdatenbank auch erstellte Layouts gespeichert und später wiederverwendet werden.

Zur Erfassung von benutzerspezifischen Konturen wird vorzugsweise ein 3D-Scanner mit anschliessender rechnerischer Auswertung der 3D-Kontur durch Projektion auf eine Ebene, oder eine Kamera zur Erfassung der Objektumrisse in einer oder mehreren Orientierungen eingesetzt. Ein Konfigurationssystem weist in diesem Falle eine Computer-Arbeitsstation zur Durchführung des Konfigurationsverfahrens auf, gekoppelt mit dem Scanner oder der Kamera, und auf der Arbeitsstation ausgeführte Auswertungsprogramme zur Auswertung der 3D-Kontur oder der Kameradaten.

Ein Einsatz für einen Behälter, in einer bevorzugten Ausführungsform der Erfindung, weist eine erste, obere Schicht von Haltematerial und eine zweite, untere Schicht von Haltematerial auf. Dabei weist die erste Schicht durchgehende Aussparungen auf und ist vorzugsweise durch eine Klebstoffschicht mit der zweiten Schicht verbunden. Die Herstellung des Einsatzes geschieht durch Ausschneiden der Konturen aus der ersten Schicht von Haltematerial, mit durchgehenden Schnitten, beispielsweise durch Wasserstrahlschneiden. Anschliessend wird die erste Schicht von Haltematerial auf die zweite Schicht geklebt.

Vorzugsweise ist dazu die erste Schicht an der Unterseite bereits vor dem Ausschneiden der Aussparungen mit einer selbstklebenden Klebstoffschicht versehen, welche bis zum Verkleben der beiden Schichten mit einer Schutzfolie abgedeckt ist.

In einer weiteren Ausführungsform der Erfindung sind die aus den Aussparungen ausgeschnittenen Teile, ohne verklebt zu sein, in die jeweiligen Aussparungen eingelegt. Damit wird einem Endkunden die Möglichkeit gegeben, diese ausgeschnittenen Teile in ihrer Höhe zuzuschneiden und wieder in die Aussparungen einzulegen oder einzukleben, beispielsweise nach Abziehen der Schutzfolie. Damit ist eine individuelle Anpassung an die Höhe von Lagerobjekten möglich. In einer anderen Variante der Erfindung wird dieses Zuschneiden der Höhe anhand von Daten aus der Lagerobjektdatenbank bereits bei der Herstellung des Einsatzes vorgenommen.

In einer weiteren bevorzugten Variante der Erfindung werden im Verfahren die Aussparungen nach einem 3D-Modell der Lagerobjekte dreidimensional ausgeformt, und sind entsprechend auch in einem Einsatz die Aussparungen dreidimensional ausgeformt.

In einer weiteren bevorzugten Ausführungsform der Erfindung wird automatisch ein Satz von übereinander angeordneten Einsätzen für einen Behälter wie eine Schublade oder ein Koffer konfiguriert. Dabei erlaubt das System zunächst die Auswahl eines Behälters, wonach aus der Behälterdatenbank dessen Innenmasse gelesen werden, oder die direkte Vorgabe von Innenmassen eines Behälters. Anschliessend erlaubt das System die Wahl einer Anzahl von Ebenen, also von einer, zwei oder drei (im Prinzip auch mehr) Ebenen. Entsprechend dieser Anzahl wird dem Benutzer eine Eingabemaske präsentiert, welche die Eingabe von gewünschten Einlagenhöhen innerhalb vorgegebener Grenzen erlaubt. Dabei wird bei mehreren Einlagen die Höhe der letzten Einlage als Ergänzung der Summe der Höhen der anderen Einlagen zur Gesamt-Innenhöhe des Behälters automatisch berechnet und angezeigt. Randbedingungen zur minimalen und maximalen Höhe der Einlagen werden dabei vorzugsweise mit einbezogen, und eine Auswahl von Höhen, die zu einer Verletzung dieser Bedingungen bei mindestens einer der Einlagen führt, wird optisch markiert und kann nicht abgespeichert oder weiter verarbeitet werden, bis der Benutzer eine zulässige Wahl getroffen hat.

In noch einer bevorzugten Ausführungsform der Erfindung bietet das Verfahren einem Benutzer die Möglichkeit, nebst einem Behälter mit einem oder mehreren Einsätzen automatisch auch die für das Layout ausgewählten Werkzeuge zu bestellen. Dazu weist das System vorzugsweise eine Datenbank auf, welche zu den Werkzeugen jeweils nebst einer benutzerspezifischen Nummer auch eine Bestellnummer des Werkzeugherstellers speichert. Damit kann eine Bestellung mit den herstellerspezifischen Informationen automatisch erstellt werden. Vorzugsweise wird diese Bestellung auch über ein Ankopplung an ein ERP-System des Benutzers automatisch an ein Bestell-Modul des ERP-Systems übertragen.

In einer weiteren bevorzugten Ausführungsform der Erfindung weist das Verfahren noch den Schritt auf, eine graphische und ausdruckbare Darstellung des Layouts zusammen mit einer Stückliste der ausgewählten Werkzeuge mit ihren Preisen und/oder Bestellnummern und Bezeichnungen zu erstellen. Diese Darstellung kann ausgedruckt oder in elektronischer Form als Offerte einem Kunden übermittelt werden. Vorzugsweise werden automatisch auch ein graphisches Logo und Angaben über den Benutzer in die Darstellung integriert.
Ein Datenverarbeitungssystem zur Konfiguration von Einsätzen weist Speichermittel mit darin gespeicherten Computerprogrammcodemitteln auf, welche ein Computerprogramm beschreiben, und Datenverarbeitungsmittel zur Ausführung des Computerprogramms, wobei die Ausführung des Computerprogramms zur Durchführung des Verfahrens gemäss der Erfindung führt.

Ein Computerprogramm zur Konfiguration von Einsätzen gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen.. In einer bevorzugten Ausführungsform der Erfindung weist ein Computerprogrammprodukt einen Datenträger, respektive ein computerlesbares Medium auf, auf welchem die Computerprogrammcodemittel gespeichert sind.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Behälter;
- Figur 2: einen Schrank mit mehreren Schubladen als Behälter;
- Figur 3: einen Einsatz in einer Aufsicht;
- Figur 4: einen Einsatz in einer seitlichen Ansicht;
- Figur 5: einen Einsatz mit unterschiedlich gearteten Teil-Einsätzen in einer seitlichen Ansicht;
- Figur 6: eine Struktur eines Konfigurationssystems;
- Figuren 7-10: Screenshots aus einem Ablauf des Konfigurationsverfahrens; und
- Figur 11: eine weitere bevorzugte Ausführungsform eines Einsatzes.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

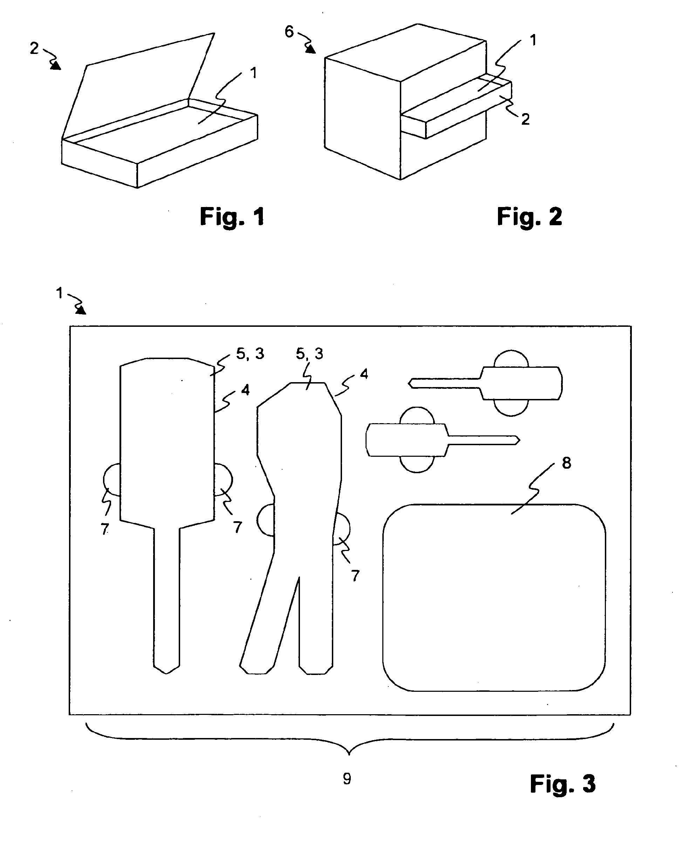

**Figur 1** zeigt einen Behälter 2, beispielsweise einen Werkzeugkoffer. Im Behälter 2 ist ein Einsatz 1 zur Halterung von Werkzeugen oder Lagerobjekten 3 eingesetzt. Im Folgenden ist der Einfachheit von Werkzeugen die Rede, wobei aber klar ist, dass sich die Erfindung auf die Lagerung von Objekten oder Körpern beliebiger Art erstreckt.

Die **Figur 2** zeigt einen Schrank 6 oder Rollschrank mit mehreren Schubladen als Behälter 2, wobei eine oder mehrere der Schubladen mit Einsätzen 1 versehen sind.

**Figur 3** zeigt einen Einsatz 1 in einer Aufsicht. Der Einsatz 1 weist mehrere Aussparungen 5 auf, welche gemäss entsprechenden Konturen 4 aus dem Material des Einsatzes 1 ausgeformt oder bis zu einer bestimmten Tiefe des Einsatzes 1 aus diesem ausgeschnitten sind. Die Aussparungen 5 sind zur Aufnahme von Werkzeugen 3 vorgesehen. Einer Kontur 4 sind vorzugsweise Greiflöcher 7 zugeordnet, welche am Rand der Kontur 4 an diese angesetzt sind.

In einem Bereich des Einsatzes 1, in welchem keine Konturen 4 von Werkzeugen 3 angeordnet sind, ist vorzugsweise ein Freifach 8, beispielsweise mit einer elementaren geometrischen Form wie Rechteck, Trapez, Dreieck oder Kreis angeordnet. Dabei ist das Freifach 8 vorzugsweise so gestaltet, dass ein Randbereich zwischen der Kontur des Freifachs 8 und den anderen Konturen 4 respektive dem Rand des Einsatzes 1 verbleibt. Die Gesamtheit der Konturen 4 in einem Einsatz 1 bildet ein Layout 9 des Einsatzes 1. Zur der automatischen Erzeugung eines Freifaches 8 wird beispielsweise eine ausgewählte Konturform in einen freien Bereich des Layouts 9 eingesetzt und in alle Richtungen soweit vergrössert, bis jeweils der Randbereich mit einer vorgegebenen minimalen Breite vorliegt.

Diese Aufsicht gemäss **Figur 3** entspricht im Wesentlichen, ergänzt um Eingabefelder und -Schaltflächen, auch einer Ansicht, wie sie einem Benutzer in einer grafischen Schnittstelle des Konfigurators angeboten wird.

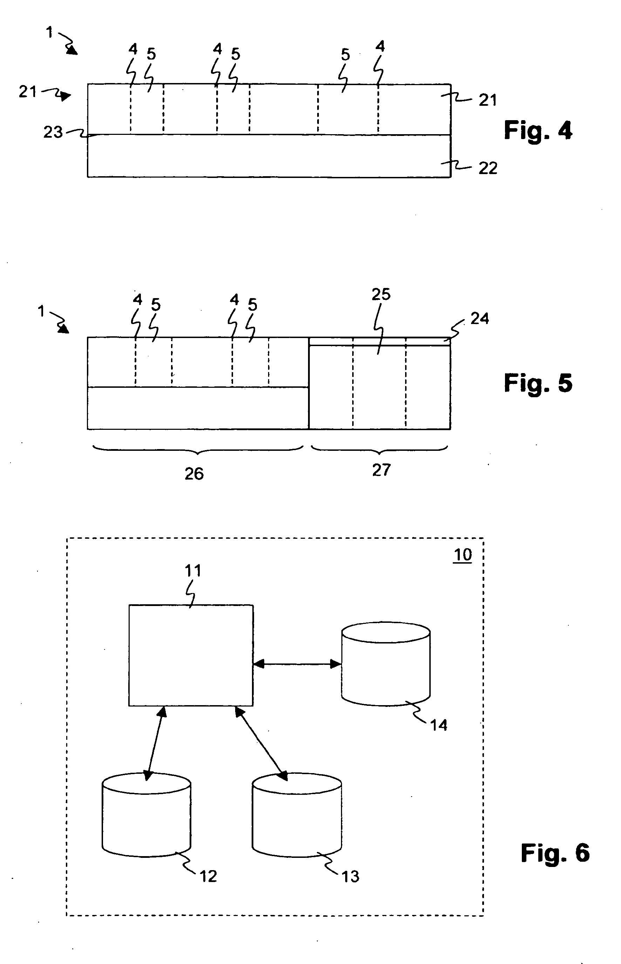

**Figur 4** zeigt einen Einsatz 1 in einer seitlichen Ansicht. Eine erste, obere Schicht 21 ist auf einer zweiten, unteren Schicht 22 angeordnet und mit dieser verklebt. Die Aussparungen 5 sind aus der ersten Schicht 21 ausgeschnitten, vorzugsweise als durchgehende Löcher, also einfach herstellbar. Durch das Aufeinanderlegen und Verkleben der beiden Schichten entsteht der Einsatz 1. Dazu weist die erste Schicht 21 vorzugsweise eine selbstklebende Klebstoffschicht 23 auf. Diese ist vorzugsweise schon vor dem Ausschneiden an der ersten Schicht 21 angebracht und ist während des Schneidens der Aussparungen 5 mit einer Schutzfolie abgedeckt.

**Figur 5** zeigt einen Einsatz 1 mit unterschiedlich gearteten Teil-Einsätzen in einer seitlichen Ansicht. Ein Teil-Einsatz 26 ist wie der Einsatz 1 der Figur 4 aufgebaut. Ein weiterer Teil-Einsatz ist für schwere Teilen vorgesehen. Beispielhaft ist dies hier Werkzeughaltereinsatz 27 zur Aufnahme von relativ schweren Werkzeughaltern, wie sie zur Halterung von beispielsweise Metallbearbeitungswerkzeugen von Bearbeitungsmaschinen verwendet werden. Der Werkzeughaltereinsatz 27 weist Ausnehmungen 25 für die Werkzeughalter auf, und an der Oberseite eine verstärkte Platte 24, beispielsweise aus einem harten Kunststoff, welche das Gewicht der Werkzeughalters aufnimmt.

Die Grösse eines Werkzeughaltereinsatzes 27 und die Anordnung der Ausnehmungen 25 kann wie bei den anderen Einsätzen interaktiv konfiguriert werden und/oder durch einen Werkzeughersteller als fertiges Sub-Layout vorgegeben werden.

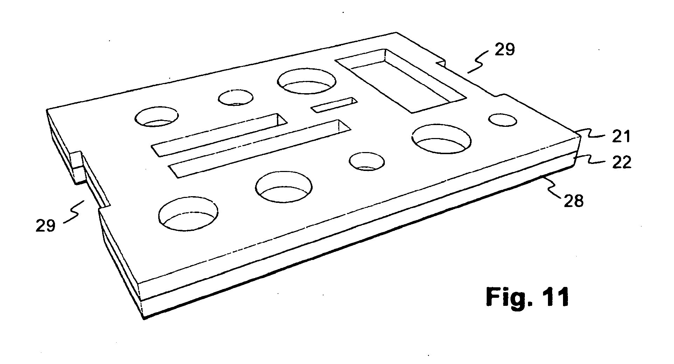

**Figur 11** zeigt eine weitere bevorzugten Ausführungsform eines Einsatzes 1, aufweisend eine Verstärkungsschicht 28 an der Unterseite des Einsatzes 1. Die Verstärkungsschicht 28 ist vorzugsweise schon als Teil der zweiten Schicht 22 an diese angeformt oder geklebt, und besteht beispielsweise aus einer Kunststoffplatte. Vorzugsweise ist diese Platte mit demselben Schneideverfahren wie die erste Schicht 21 zuschneidbar, insbesondere durch Wasserstrahlschneiden. Bei besonders schweren Lagerobjekten 3 kann sie aber auch aus beispielsweise Metall oder aus einer profilierten Kunststoffplatte bestehen. Der Einsatz 1 weist an seinem Umfang Aussparungen 29 zum Ergreifen des Einsatzes 1 auf. Dadurch kann der Einsatz 1 aus einem ersten Behälter entnommen und in einen zweiten Behälter gelegt werden, wobei die beiden Behälter im Wesentlichen gleiche Innenmasse aufweisen, so dass der Einsatz 1 ohne seitlich verrutschen zu können im jeweiligen der Behälter gehalten ist.

Für eine solche Anwendung ist das Auslegungsverfahren vorzugsweise dazu eingerichtet, einen Satz von Einheiten, bestehend aus einem ersten Behälter (beispielsweise einem Schubladenschrank), mindestens einem Einsatz 1 und mindestens einem zweiten Behälter (beispielsweise einem Koffer) zusammenzustellen und in computerlesbarer Form zu speichern, wobei die Innenmasse des ersten und des zweiten Behälters auf die Aussenmassse des Einsatzes 1 abgestimmt sind. Vorzugsweise wird damit automatisch eine Bestellung der Einheiten eines solchen Satzes erzeugt, optional auch mit den entsprechenden Werkzeugen. In einer bevorzugten Ausführungsform der Erfindung geschieht das Zusammenstellen, indem vorgegebene Sätze von ersten Behältern und zweiten Behältern in einer Datenbank hinterlegt sind, und ein Benutzer einen dieser Sätze auswählt, und anschliessend das Layout des zu beiden Behältern passenden Einsatzes bearbeiten kann.

**Figur 6** zeigt eine Struktur eines Konfigurationssystems 10: Dieses weist auf
- eine Datenverarbeitungseinheit als Konfigurator 11, welche zur Ausführung des Konfigurationsverfahrens nach einem oder mehreren der Ansprüche 1 bis 9 programmiert ist,
- eine Behälterdatenbank 12 zur Speicherung von geometrischen Massen der Behälter 2 und zur Übermittlung solcher Masse an den Konfigurator 11, und
- eine Lagerobjektdatenbank 13 zur Speicherung von Konturen 4 der Lagerobjekte 3 und zur Übermittlung solcher Konturen 4 an den Konfigurator 11.

Dabei ist der Konfigurator 11 optional mit einer Benutzerdatenbank 14 zur Speicherung von weiteren Konturen 4 und zur Übermittlung solcher weiteren Konturen 4 an den Konfigurator 11 verbindbar.

Im Folgenden wird der Ablauf der Konfiguration beispielhaft erläutert, eingebettet in vorangehende und anschliessende Verfahren zur Anmeldung respektive Ausführung eines Auftrages. Das Verfahren wird anhand einer Folge von verschiedenen Seiten, wie sie durch eine Benutzerschnittstelle angezeigt werden, erklärt.

**Anmeldungsseite:** Um den Konfigurator 11 benützen zu können, müssen sich die Benutzer, im Folgenden auch Kunden genannt, erst über einen Händler anmelden, dieser bestimmt dann ob dem Antragssteller die Benützung der Konfigurator 11 freigeschaltet wird und ihm somit der Zugriff über das entsprechende Händlerportal gewährleistet wird. Der Kunde kann automatisch auf die Lagerobjektdatenbank 13 zugriffen, welche über dieses Händlerportal hinterlegt ist und sich seinen eigenen Hartschaumeinsatz 1 für seine Bedürfnisse zusammenstellen.

**Startseite**: Auf der Startseite kann sich der Kunde seine eigene Benutzerdatenbank 14 anlegen und seine erstellten Hartschaumeinsätze 1 hinterlegen. Der Kunde hat so die Möglichkeit sich eine Übersicht über seine erstellten Hartschaumeinsätze 1 zu machen, sollte er wenn nötig den einen oder anderen nochmals brauchen, kann er einfach durch Bestätigen den gleichen Hartschaumeinsatz 1 Einsatz 1 nach Belieben nachbestellen.

**Typ / Grösse bestimmen:** Auf der Seite Typ/Grösse kann der Kunde die Grösse des Hartschaumeinsatzes bestimmen. Als erstes muss sich der Kunde entscheiden, welche Konfiguration er möchte:
1. Werkzeugeinsatz (für Standardwerkzeuge);
2. Komponenteneinsatz (für eigene Konturen 4);
3. Werkzeughaltereinsatz; oder
4. eine Kombination solcher Einsätze als Teil-Einsätze.

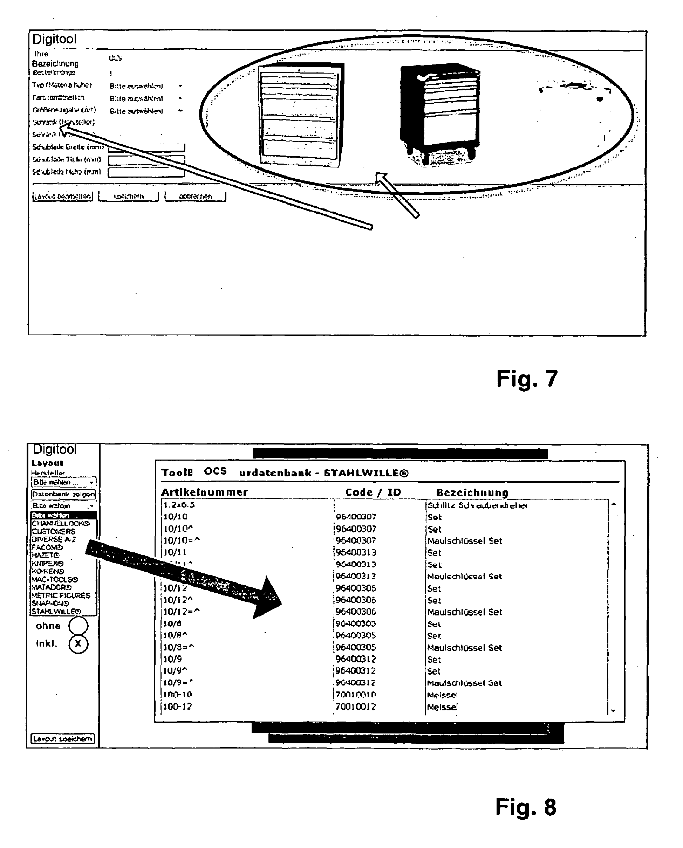

Danach kann er die Grösse des Hartschaumeinsatzes 1 anhand eines ausgewählten Schrankes, Werkstattwagens oder eines Koffers automatisch übernehmen **(****Figur 7****)**. Hier kann auch die Höhe eines Hartschaumeinsatzes 1 eingegeben werden. Zur Lagerung von benutzerspezifischen Komponenten kann der Kunde alle Dimensionen (HxBxL) des Einsatzes durch Eingabe in mm selber bestimmen.

### Datenbank für Schränke/Werkstattwagen/Koffer/Werkzeuge/Komponenten:

Auf der Behälterdatenbank 12 und der Lagerobjektdatenbank 13 befinden sich Standarddaten der einzelnen Hersteller/Marken von den Schränken, Werkstattwagen, Koffern und Werkzeugkonturen, die für alle Händler zu Verfügung gestellt werden. Die einzelnen Werkzeugkonturen können über ein Suchfeld vom Kunden anhand der Eingabe der Artikelnummer, die ebenfalls im aktuellen Katalog der einzelnen Werkzeughersteller zu finden ist (**Figur 8**), gesucht und dann in das entsprechende Layout des aktuelle erstellten Hartschaumeinsatzes eingefügt werden. Dies ermöglicht es dem Kunden ein sehr schnelles Gestalten des von Ihm gewünschten Layouts und hilft zudem Fehler bei der Auswahl der Werkzeugkonturen zu vermeiden, des weiteren wird es für den Händler einfacher bei der Auslieferung der Hartschaumeinsätze 1, wenn der Kunde diese inklusive Werkzeug bestellt hat. Da der Kunde sich über ein Einstiegsportal eines Händlers in den Konfigurator 11 einloggt, wird dem Kunden automatisch die Datenbank zur Verfügung/ersichtlich gestellt, welche für den entsprechenden Händler hinterlegt wurde,. Dies ermöglicht den Händlern, die eine eigene Schrankmarke, Werkstattwagenmarke, Koffermarke sowie Werkzeugmarke besitzen, diese exklusiv zu vertreiben, so dass nur die eigenen Kunden auf die Datenbank zugreifen können. Ebenfalls wird vorzugsweise das entsprechende Logo des Händlers inklusive einer Artikelnummer auf jeden Hartschaumeinsatz 1 gedruckt.

Bei der Auswahl eines Schubladenschrankes wird dem Kunden automatisch ein Bild des von ihm ausgewählten Schubladenschrankes angezeigt. Auf dem Bild kann der Kunde die entsprechende Schublade anklicken, darauf kann er aus einem Standardsortiment einzelne Grössen der Hartschaumeinsätze 1, oder aber auch die ganze Schubladengrösse, die zur Verfügung steht, auswählen. Die einzelnen ausgewählten Module werden neben dem Bild in einer Schublade dargestellt, damit der Kunde sieht, welchen Platz der Hartschaumeinsatz 1 benötigt, und wieviel freier Platz ihm noch zur Verfügung steht. Die gleiche Dienstleistung steht dem Kunden ebenfalls mit den Werkstattwagen und den Koffern zu Verfügung.

Anstelle von einem Behälter auszugehen, kann in einer anderen bevorzugten Ausführungsform der Erfindung der Benutzer die gewünschten Masse eines Einsatzes vorgeben und den Typ von Behälter 2 (Koffer, Schrank etc.) auswählen, worauf das System aus der Behälterdatenbank passende konkrete Behälter 2 dieses Typs, welche ähnliche, insbesondere leicht grössere, Innenmasse aufweisen, sucht und dem Benutzer zur Auswahl präsentiert.

Nach der Vorgabe oder der Auswahl des Behälters durch den Benutzer wird vorzugsweise optional die Höhe von Einsätzen 1 für Behälter 2, in denen mehrere Einsätze 1 übereinander angeordnet sind, wie folgt konfiguriert: Die Gesamthöhe der Einsätze 1 wird entsprechend der Innenhöhe des Behälters aus der Behälterdatenbank bestimmt. Der Kunde kann auswählen, wieviele Ebenen er möchte, in der Regel aus einer Auswahl von einer, zwei oder drei Ebenen, entsprechend dem grössten und dem kleinsten zu lagernden Teil.
■ Wird "eine Ebene" ausgewählt, wird dieser eine Standardhöhe zugewiesen, beispielsweise die Innenhöhe des Koffers, oder ein fixer Wert wie 100mm.
■ Wird "zwei Ebenen" ausgewählt, werden zwei Zahlenfelder mit den Höhen der Einsätze angezeigt, vorzugsweise mit einer Standardvorgabe, z.b. 30 mm und 70 mm. In mindestens eines der Zahlenfelder kann der Benutzer eine andere Höhe schreiben. Bei Eingaben des Benutzers in einem Feld wird das andere Feld automatisch angepasst, so dass die Summe der Höhen konstant bleibt, insbesondere gleich einer Standardhöhe oder der Innenhöhe des Koffers.
■ Wird "drei Ebenen" ausgewählt, werden drei Zahlenfelder mit den Höhen der Einsätze angezeigt, von denen mindestens zwei änderbar sind. Analog wird auch hier der Wert im dritten Feld automatisch zu einer Summenhöhe ergänzt.

Nach demselben Prinzip können natürlich auch die Höhen von vier oder mehr übereinanderliegenden Einsätzen eingegeben werden.Vorzugsweise wird jeweils eine Fehlermeldung ausgegeben, wenn die Höhe eines der Einsätze ein vorgegebenes Minumum unterschreitet oder ein vorgegebenes Maximum überschreitet.

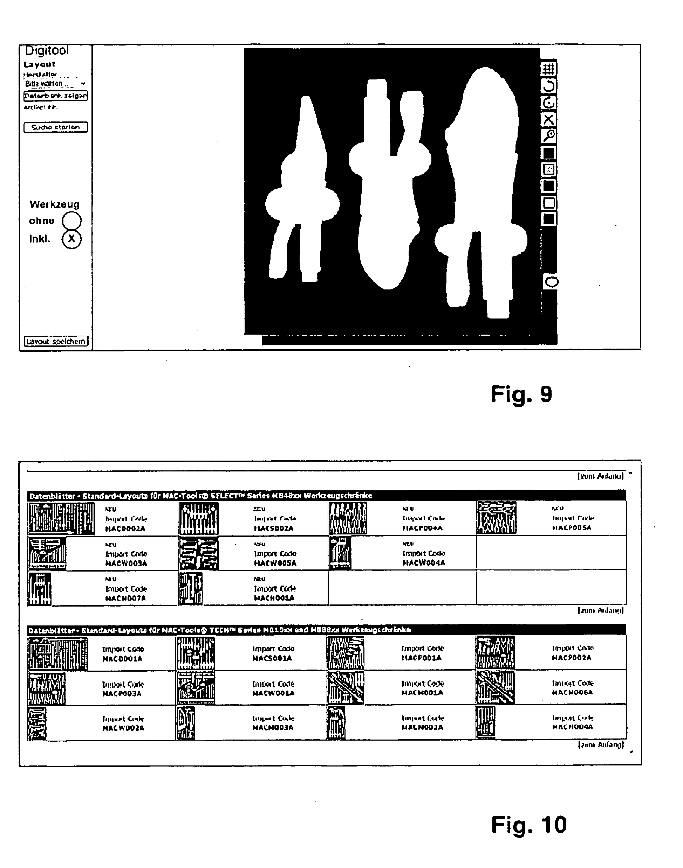

**Layout erstellen:** Auf dieser Seite wird ein einzelner Hartschaumeinsatz 1 angezeigt. Jetzt kann der Kunde seinen zusammengestellten Hartschaumeinsatz 1 mit Werkzeugkonturen bestücken oder 3D-Daten von seinen Teilen/Komponenten, die er in den Konfigurator 11 eingespielt hat, auf dem Hartschaumeinsatz 1 positionieren. Die Software berechnet dem Kunden automatisch die Konturen und gibt ihm betreffend der Höhe automatisch einen Vorschlag. Die Konturen werden dem Kunden bildlich in der von ihm gewünschten Farbe der unteren Schaumschicht (Höhe z.B. 25mm) im richtigen Verhältnis angezeigt (**Figur 9**). Die Positionierung der einzelnen Konturen können in beiden Varianten von Hand per Maus vorgenommen werden, dabei ist vorzugsweise zu achten, dass ein Mindestabstand zwischen den einzelnen Konturen von mindestens 5mm eingehalten wird.

In einer bevorzugten Ausführungsform der Erfindung bietet das Layoutsystem dem Benutzer auch die Möglichkeit, einfache geometrische Formen, beispielsweise Rechtecke, im Layout einzuzeichnen, in der Grösse anzupassen und zu positionieren. Diese Formen werden bei der Herstellung des Einsatzes ebenfalls ausgeschnitten. Damit ist eine einfache Möglichkeit gegeben, um Ausschnitte für Objekte zu erstellen, zu denen keine Konturen abgelegt sind.

**Layoutvorlagen:** Layoutvorlagen (**Figur 10**) dienen den Kunden, die sich bereits für einen bestimmten Typ von Schubladenschrank, Werkstattwagen, Koffer oder einer eigens bestimmten Grösse eines Lagerplatzes entschieden haben. Die Layoutvorlagen sind Vorlagen, welche die einzelnen Werkzeughersteller bereits mit oder ohne einem entsprechenden Werkzeug-Set anbieten. Der Kunde, der eine solche Layoutvorlage auswählt und in einer Schublade oder in einem Koffer einsetzen möchte, wird automatisch gewarnt, sollte dieser Hartschaumeinsatz 1 von seiner Grösse her nicht zur Grösse der ausgewählten Schublade oder des Koffers kompatibel sein.

**Layout fertigstellen:** Wenn sich der Kunde das Layout 9 für den Hartschaumeinsatz 1 nach seinen Bedürfnissen erstellt hat, kann er durch Setzen einer Markierung im dafür vorgesehenen Kästchen auswählen, ob er den Hartschaumeinsatz 1 mit oder ohne Werkzeug, mit oder ohne Schubladenschrank, Werkstattschrank oder Koffer bestellen möchte. Der Kunde/Händler kann in einem Feld ebenfalls die zu bestellende Menge der Hartschaumeinsätze 1 bestimmen.

Die abschliessenden Schritte sind:
- Bestätigen und Absenden einer Bestellung
- Produktion: die Daten zum bestellten Hartschaumeinsatz 1 werden beispielsweise als dxf-Datei einem Hersteller oder einer Zwischenstelle übermittelt, dort werden die Daten automatisch in ein Programm in einer entsprechenden NC-Sprache für die einzelnen Fräs- oder Wasserstrahlschneidemaschinen umgewandelt und zur Herstellung verwendet.
- Versand des Hartschaumeinsatzes 1 an Händler, Zusammenstellen der bestellten Elemente (Einsätze 1, Behälter 2 und Werkzeuge 3 je nach Bestellung). Der Kunde wird somit nur von einem Händler beliefert und erhält seine bestellten Produkte in einer Lieferung bereits fertig zusammengestellt.

### BEZUGSZEICHENLISTE

- 1: Einsatz
- 2: Behälter
- 3: Lagerobjekt
- 4: Kontur
- 5: Aussparung
- 6: Schrank
- 7: Greifloch
- 8: Freifach
- 9: Layout
- 10: Konfigurationssystem
- 11: Konfigurator
- 12: Behälterdatenbank
- 13: Lagerobjektdatenbank
- 14: Benutzerdatenbank
- 21: erste Schicht
- 22: zweite Schicht
- 23: Klebstoffschicht
- 24: verstärkte Platte
- 25: Ausnehmung
- 26: Teil-Einsatz
- 27: Werkzeughaltereinsatz
- 28: Verstärkungsschicht
- 29: Aussparungen

## Patentansprüche

1. Verfahren zur Konfiguration von Einsätzen (1) für Behälter (2) für Lagerobjekte (3), wobei die Einsätze (1) individualisierte Aussparungen (5) entsprechend der Form der Lagerobjekte (3) aufweisen und zur Aufnahme der Lagerobjekte (3) vorgesehen sind, wobei
das Verfahren die folgenden Schritte aufweist:
• Erfassen, nach Massgabe einer Benutzereingabe, einer Auswahl von einem oder mehreren Lagerobjekten (3) und/oder von einer oder mehreren Konturen (4), wobei eine Kontur jeweils die Form einer Aussparung (5) definiert;
• falls Lagerobjekte (3) ausgewählt worden sind, Bestimmen von entsprechenden Konturen (4) der Lagerobjekte (3) durch Auslesen aus einer Lagerobjektdatenbank (13);
• Erstellen, automatisiert und/oder durch Interaktion mit einem Benutzer, eines Layouts (9), wobei das Layout (9) eine Anordnung der erfassten respektive bestimmten Konturen (4) auf einem Einsatz (1) für einen ausgewählten Behälter (2) repräsentiert; und
• Abspeichern des Layouts (9) auf einem Datenträger und/oder Übermitteln des Layouts (9) zur Herstellung des Einsatzes (1);
**dadurch gekennzeichnet, dass** die geometrischen Masse des ausgewählten Behälters (2) bestimmt werden durch:
• Erfassen, nach Massgabe einer Benutzereingabe, einer Auswahl eines Behälters (2);
• Auslesen von geometrischen Massen des ausgewählten Behälters (2) einschliesslich einer Höhe des ausgewählten Behälters (2) aus einem Speicher einer Behälterdatenbank (12);
und dass das Verfahren als weiteren Schritt aufweist
• automatische Überprüfung, ob eine Höhe eines Lagerobjekts (3), ggf. gemäss seiner Orientierung, nicht eine entsprechend der Höhe des ausgewählten Behälters (2) vorgegebene Maximalhöhe überschreitet.

2. Verfahren gemäss Anspruch 1, wobei beim Erstellen des Layouts (9) eine von mehreren Orientierungen eines Lagerobjektes um eine horizontale Achse wählbar ist.

3. Verfahren gemäss Anspruch 2, wobei, falls ein Lagerobjekt (3) die Maximalhöhe überschreitet, ein Behälter (2) mit ausreichender Höhe durch Abfrage der Behälterdatenbank (12) ermittelt wird und dem Benutzer vorgeschlagen wird.

4. Verfahren gemäss einem der bisherigen Anspruche, wobei, manuell oder automatisch ein "Freifach" (8) definiert wird, wobei das Freifach (8) eine weitere, neben den bereits erfassten respektive bestimmten Konturen (4) verbleibende Fläche des Einsatzes, mit oder ohne Umrandung, als auszuschneidende Kontur definiert.

5. Verfahren gemäss einem der bisherigen Ansprüche, wobei, entsprechend einer Kategorie eines Lagerobjektes, dem Lagerobjekt eine bestimmte Art von Haltematerial zugeordnet ist.

6. Verfahren gemäss Anspruch 5, wobei, falls mindestens ein Lagerobjekt (3) zu einer bestimmten Kategorie gehört, der Einsatz (1) vertikal in seitlich nebeneinander angeordnete Teilbereiche unterteilt wird, und ein Teilbereich des Einsatzes (1) für die Verwendung eines besonderen Haltematerials zur Lagerung dieses mindestens einen Lagerobjekts (3) vorgesehen wird.

7. Verfahren gemäss einem der bisherigen Ansprüche, wobei einem bestimmten Benutzer aus der Lagerobjektdatenbank (13), nach Massgabe einer Benutzeridentifikation, nur eine Untermenge von Lagerobjekten (3) angezeigt wird und durch diesen Benutzer auswählbar ist.

8. Verfahren gemäss einem der bisherigen Ansprüche, wobei benutzerspezifische Konturen (4) in einer individuellen Benutzerdatenbank (14) abgespeichert sind und beim Konfigurieren des Einsatzes (1) im Schritt des Erfassens der Konturen (4) zur Verfügung stehen.

9. Verfahren gemäss einem der bisherigen Anspruche, wobei für einen Satz von Einsätzen (1), welche dazu vorgesehen sind, im selben Behälter (2) aufeinander gelegt zu werden, eine Gesamthöhe des Satzes der Einsätze (1) anhand einer in der Behälterdatenbank gespeicherten Innenhöhe des Behälters (2) bestimmt wird, und bei der Eingabe einer Höhe eines der Einsätze durch den Benutzer die Höhe mindestens eines der anderen Einsätze automatisch nach Massgabe der Gesamthöhe angepasst wird, so dass die Summe der Einsätze (1) nicht die Gesamthöhe übersteigt.

10. **Konfigurationssystem** (10) zur Konfiguration von Einsätzen (1) für Behälter (2) für Lagerobjekte (3), aufweisend
• eine Datenverarbeitungseinheit als Konfigurator (11), welche zur Ausführung des Konfigurationsverfahrens nach einem oder mehreren der Ansprüche 1 bis 9 programmiert ist, sowie
• eine Behälterdatenbank (12) zur Speicherung von geometrischen Massen der Behälter (2) und zur Übermittlung solcher Masse an den Konfigurator (11), und
• eine Lagerobjektdatenbank (13) zur Speicherung von Konturen (4) der Lagerobjekte (3) und zur Übermittlung solcher Konturen (4) an den Konfigurator (11), und
wobei der Konfigurator (11) optional mit einer Benutzerdatenbank (14) zur Speicherung von weiteren Konturen (4) und zur Übermittlung solcher weiteren Konturen (4) an den Konfigurator (11) verbindbar ist.

11. Computerprogramm zur Konfiguration von Einsätzen welches auf einer Datenverarbeitungseinheit ladbar und ausführbar ist, und welches bei der Ausführung das Verfahren nach einem oder mehreren der Ansprüche 1 bis 9 ausführt.

12. Datenträger, enthaltend ein Computerprogramm gemäss Anspruch 11.

## Claims

1. Method for the configuration of inserts (1) for containers (2) for storage objects (3), wherein the inserts (1) comprise individualised recesses (5) corresponding to the shape of the storage objects (3) meant for receiving the storage objects (3), wherein the method comprises the following steps:
• recording in accordance with a user input a selection of one or several storage objects (3) and/or of one or several contours (4), wherein a contour respectively defines the shape of a recess (5);
• when storage objects (3) have been selected, the determination of corresponding contours (4) of the storage objects (3) by the selection of a storage object data base (13);
• establishing, automated and/or by interaction with a user, of a layout (9), wherein the layout (9) represents an arrangement of the recorded, respectively, determined contours (4) on an insert (1) for a selected container (2); and
• the saving of the layout (9) on a data carrier and/or the transmitting of the layout (9) for the manufacturing of the insert (1);
**characterised in that** the geometrical dimensions of the selected container (2) are determined by:
• the recording in accordance with a user input of a selection of a container (2);
• the selecting of geometrical dimensions of the selected container (2) from the memory of a container data base (12);
and the method as a further step comprises
• the automatic verification as to whether the height of a storage object (3), if so required according to its orientation, does not exceed a predefined maximum height corresponding to the height of the selected container (2).

2. Method in accordance with claim 1, wherein when establishing the layout (9) one of several orientations of a storage object around a horizontal axis is capable of being selected.

3. Method in accordance with claim 2, wherein, if a storage object (3) exceeds the maximum height, a container with a sufficient height is determined by interrogating the container data base (12) and suggested to the user.

4. Method in accordance with one of the preceding claims, wherein, manually or automatically a "free compartment" (8) is defined, wherein the free compartment (8) apart from the already recorded, respectively, defined contours (4) defines a further remaining surface of the insert, with or without the edge border as the contour to be cut out.

5. Method in accordance with one of the preceding claims, wherein, corresponding to a category of a storage object, the storage object is assigned a certain type of holding material.

6. Method in accordance with claim 5, wherein, if at least one storage object (3) belongs to a certain category, the insert (1) is vertically subdivided into laterally arranged next to one another partial sectors, and a partial sector of the insert (1) is provided for the utilisation of a particular holding material for storing this at least one storage object (3).

7. Method in accordance with one of the preceding claims, wherein to a certain user from the storage object data base (13) in accordance with a user identification only a sub-quantity of storage objects (3) is indicated and is able to be selected by this user.

8. Method in accordance with one of the preceding claims, wherein user-specific contours (4) are stored in an individual data base (14) and when configuring the insert (1) are available in the step of recording the contours (4).

9. Method in accordance with one of the preceding claims, wherein for a set of inserts (1), which are destined to be laid one above the other in the same container (2), an overall height of the set of inserts (1) is determined on the basis of a stored internal height of the container (2), and, during the entering of a height of one of the inserts by the user, the height of at least one of the other inserts is automatically adapted according to the overall height, so that the height of the sum of the inserts (1) does not exceed the overall height.

10. **Configuration system** (10) for the configuration of inserts (1) for containers (2) for storage objects (3), comprising
• a data processing unit as configurator (11), which is programmed for implementing the configuration process in accordance with one or several of the claims 1 to 9, as well as
• a container data base (12) for storing the geometrical dimensions of the containers (2) and for transmitting such dimensions to the configurator (11), and
• a storage object data base (13) for storing the contours (4) of the storage objects (3) and for transmitting such contours to the configurator (11), and
wherein the configurator (11) is capable of being combined with a user data base (14) for storing further contours (4) and for the transmitting of such further contours (4) to the configurator (11).

11. Computer program for the configuration of inserts, which is capable of being loaded into a data processing unit and implemented, and which during the implementation carries out the method in accordance with one or several of the claims 1 to 9.

12. Data carrier, comprising a computer program in accordance with claim 11.

## Revendications

1. Procédé pour la configuration d'insertions (1) destinées à des récipients (2) pour des objets de stockage (3), dans lequel les insertions (1) présentent des évidements individualisés (5) en fonction de la forme des objets de stockage (3) et sont prévues pour la réception des objets de stockage (3), dans lequel :
le procédé présente les étapes suivantes :
• la saisie, selon la prescription de mesure d'une entrée de l'utilisateur, d'un choix de un ou de plusieurs objets de stockage (3) et/ou d'un ou de plusieurs contours (4) et dans lequel un contour définit respectivement la forme d'un évidement (5) ;
• si des objets de stockage (3) ont été sélectionnés, la détermination des contours correspondants (4) des objets de stockage (3) par la lecture depuis une base de données d'objets de stockage (13) ;
• l'élaboration, automatisée et/ou par l'interaction avec un utilisateur, d'une configuration (9), sachant que la configuration (9) représente un agencement des contours saisis, respectifs et déterminés (4) sur une insertion (1) pour un récipient choisi (2) ; et
• la mémorisation de la configuration (9) sur un support de données et/ou la transmission de la configuration (9) pour la fabrication de l'insertion (1) ;
**caractérisé en ce que** les dimensions géométriques du récipient choisi (2) sont déterminées par :
• la saisie, selon la prescription de mesure d'une entrée de l'utilisateur, d'un choix d'un récipient (2) ;
• la lecture des dimensions géométriques du récipient choisi (2), y compris une hauteur du récipient choisi (2) depuis une mémoire d'une base de données de récipients (12) ;
et **en ce que** le procédé présente comme autre étape :
• la vérification automatique si une hauteur d'un objet de stockage (3), le cas échéant conformément à son orientation, ne dépasse pas une hauteur maximale prescrite en fonction de la hauteur du récipient choisi (2).

2. Procédé conformément à la revendication 1, dans lequel, lors de la fabrication de la configuration (9), il est possible de choisir une parmi plusieurs orientations d'un objet de stockage autour d'un axe horizontal.

3. Procédé conformément à la revendication 2, dans lequel, si un objet de stockage (3) dépasse la hauteur maximale, un récipient (2) est déterminé avec une hauteur suffisante par l'interrogation de la base de données de récipients (12) et est proposé à l'utilisateur.

4. Procédé conformément à l'une des revendications précédentes, dans lequel, un « casier libre » (8) est défini manuellement ou automatiquement et dans lequel le casier libre (8) définit une autre surface restante de l'insertion, outre les contours respectifs et déterminés (4) qui sont déjà saisis, avec ou sans bordure, comme contours à découper.

5. Procédé conformément à l'une des revendications précédentes, dans lequel, conformément à une catégorie d'un objet de stockage, une certaine sorte de matériau de maintien est attribuée à l'objet de stockage.

6. Procédé conformément à la revendication 5, dans lequel, si au moins un objet de stockage (3) appartient à une certaine catégorie, l'insertion (1) est subdivisée verticalement en zones partielles agencées latéralement l'une à côté de l'autre, et dans lequel une zone partielle de l'insertion (1) est prévue pour l'utilisation d'un matériau de maintien particulier pour le stockage de ce au moins un objet de stockage (3).

7. Procédé conformément à l'une des revendications précédentes, dans lequel seulement une quantité partielle d'objets de stockage (3) est affichée à un certain utilisateur depuis la base de données d'objets de stockage (13) après la prescription de mesure d'une identification d'utilisateur, et peut être choisie par cet utilisateur.

8. Procédé conformément à l'une des revendications précédentes, dans lequel des contours (4) spécifiques à l'utilisateur sont mémorisés dans une base de données individuelle d'utilisateur (14) et sont disponibles lors de la configuration de l'insertion (1) pendant l'étape de la saisie des contours (4).

9. Procédé conformément à l'une des revendications précédentes, dans lequel, pour un set d'insertions (1) qui sont prévues pour être placées les unes sur les autres dans le même récipient (2), une hauteur totale du set des insertions (1) est déterminée à l'aide d'une hauteur intérieure du récipient (2) qui est mémorisée dans la base de données de récipients, et dans lequel la hauteur d'au moins une des autres insertions est adaptée automatiquement selon la prescription de mesure de la hauteur totale lors de l'indication d'une hauteur d'une des insertions par l'utilisateur de telle sorte que la somme des insertions (1) ne dépasse pas la hauteur totale.

10. **Système de configuration** (10) pour la configuration d'insertions (1) destinées à des récipients (2) pour des objets de stockage (3), comportant :
* une unité de traitement des données comme configurateur (11), laquelle est programmée pour l'exécution du procédé de configuration selon l'une ou plusieurs des revendications 1 à 9, ainsi que
* une base de données de récipients (12) pour la mémorisation des mesures géométriques des récipients (2) et pour la transmission de telles mesures au configurateur (11),
* une base de données d'objets de stockage (13) pour la mémorisation des contours (4) des objets de stockage (3) et pour la transmission de tels contours (4) au configurateur (11), et
dans lequel le configurateur (11) peut être relié en option à une base de données d'utilisateurs (14) pour la mémorisation des autres contours (4) et pour la transmission de tels autres contours (4) au configurateur (11).

11. Programme d'ordinateur pour la configuration des insertions, lequel peut être chargé et exécuté sur une unité de traitement des données et lequel exécute, lors de l'exécution, le procédé selon l'une ou plusieurs des revendications 1 à 9.

12. Support de données qui contient un programme d'ordinateur selon la revendication 11.
